# EUROPÄISCHE PATENTSCHRIFT

(11) **EP 2 222 980 B1**
(45) Veröffentlichungstag und Bekanntmachung des Hinweises auf die Patenterteilung: **30.05.2012**
(21) Anmeldenummer: 08865400.9
(22) Anmeldetag: 08.12.2008
(51) Int. Cl.: B60K 6/48, B60K 6/52, B60K 23/04, F16H 48/10

(54) **GETRIEBEVORRICHTUNG**
TRANSMISSION DEVICE
SYSTÈME DE BOÎTE DE VITESSES

(30) Priorität: 20.12.2007 DE 102007055881
(43) Veröffentlichungstag der Anmeldung: 01.09.2010
(73) Patentinhaber: ZF Friedrichshafen AG, 88038 Friedrichshafen (DE); Forschungsgesellschaft für Zahnräder und Getriebe mbH, 85748 Garching (DE)
(72) Erfinder: PELCHEN, Christoph, 88069 Tettnang (DE); ROSEMEIER, Thomas, 88074 Meckenbeuren (DE); HÖHN, Bernd-Robert, 81925 München (DE)
(86) Internationale Anmeldenummer: PCT/EP2008/066978
(87) Internationale Veröffentlichungsnummer: WO 2009/080473

(56) Entgegenhaltungen:
- EP-A- 1 787 846
- US-A- 6 098 737

## Beschreibung

Die Erfindung betrifft eine Getriebevorrichtung gemäß dem Oberbegriff des Patentanspruches 1.

Eine derartige Getriebevorrichtung zeigt beispielsweise die DE 10 2006 031 089.6, bei der zum Antrieb einer Achse eines Kraftfahrzeuges über eine elektrische Maschine und eine Schalteinrichtung (Kupplung) entweder ein Antriebsmodus mit gleichem Abtriebsdrehmoment an den angetriebenen Rädern oder ein Torque-Vectoring-Modus mit unterschiedlichem Abtriebsmoment ausführbar ist. Dazu sind zwei miteinander in Wirkverbindung stehende Planetenradsätze mit dazwischen liegender Kupplung vorgesehen. Für die Darstellung beider Antriebsmodi sind in beiden Planetenradsätzen in axialer Richtung gesehen zwei bzw. drei Zahneingriffe nebeneinander erforderlich.

Eine Getriebevorrichtung mit zwei Ausgangswellen und genau zwei miteinander in Wirkverbindung stehenden mehrwelligen Planetenradsätzen ist aus der US 6 098 737 A bekannt. Jeweils eine Welle eines Planetenradsatzes ist mit einer Ausgangswelle in Wirkverbindung bringbar. Zusätzlich ist eine Schalteinrichtung vorgesehen, über welche zwischen einem ersten Leistungspfad oder einem zweiten Leistungspfad zwischen den Ausgangswellen umschaltbar ist, wobei im Bereich einer weiteren Welle eines der Planetenradsätze ein Drehmoment einer elektrischen Maschine in den ersten oder den zweiten Leistungspfad einlegbar ist. Das Drehmoment der elektrischen Maschine wird bei geschaltetem erstem Leistungspfad zu gleichen Teilen und bei gleichem Vorzeichen und bei geschaltetem zweitem Leistungspfad zu gleichen Teilen mit unterschiedlichen Vorzeichen zu den Ausgangswellen geführt.

Bei einer ersten Gruppe verschiedener Ausführungsformen der Getriebevorrichtung sind die beiden Planetenradsätze als Doppelplanetenradsätze ausgebildet. Weitere einer zweiten Gruppe angehörende Ausführungsformen der Getriebevorrichtung umfassen jeweils zwei als Differentiale ausgebildete Planetenradsätze.

Des Weiteren ist aus der EP 1 787 846 A1 eine Getriebevorrichtung mit zwei Ausgangswellen und drei miteinander in Wirkverbindung stehenden mehrwelligen Planetenradsätzen bekannt. Dabei ist jeweils eine Ausgangswelle mit einer Welle eines Planetenradsatzes in Wirkverbindung bringbar. Zusätzlich ist eine Schalteinrichtung vorgesehen, über welche zwischen einem ersten Leistungspfad oder einem zweiten Leistungspfad zwischen den Ausgangswellen umschaltbar ist, wobei im Bereich einer weiteren Welle eines der Planetenradsätze ein Drehmoment einer elektrischen Maschine in den ersten oder den zweiten Leistungspfad einleitbar ist. Das Drehmoment der elektrischen Maschine wird bei geschaltetem erstem Leistungspfad zu gleichen Teilen und gleichem Vorzeichen und bei geschaltetem zweitem Leistungspfad zu gleichen Teilen mit unterschiedlichen Vorzeichen zu den Ausgangswellen geführt. Wenigstens einer der Planetenradsätze ist als einfacher Minusplanetenradsatz auszuführen. Dieser ist mit den zwei weiteren Planetenradsätzen zu kombinieren, um sowohl einen elektrischen Antrieb als auch eine Torque-Veetoring-Funktion darstellen zu können.

Aufgabe der Erfindung ist es, eine Getriebevorrichtung der gattungsgemäßen Art vorzuschlagen, die bei geringer Anzahl an Zahneingriffen bzw. günstigerem Wirkungsgrad eine baulich und konstruktiv noch verbesserte Konzeption aufweist.

Diese Aufgabe wird erfindungsgemäß mit den kennzeichnenden Merkmalen des Patentanspruches 1 gelöst. Vorteilhafte Weiterbildungen der Erfindung beinhalten die Unteransprüche.

Erfindungsgemäß wird vorgeschlagen, dass einer der beiden Planetenradsätze als vierwelliges, reduziertes Koppelgetriebe ausgeführt ist, mit zwei axial nebeneinander angeordneten Sonnenrädern, einem gemeinsamen Planetenradträger mit radial inneren und radial äußeren, miteinander kämmenden Planetenrädern, die mit den Sonnenrädern unterschiedlicher Zähnezahl einerseits und mit einem unverdrehbar angeordneten Hohlrad andererseits in Eingriff sind. Eine derartige Getriebevorrichtung mit reduziertem Koppelgetriebe kann überall dort verwendet werden, wo auf engem Bauraum zwei betragsgleiche Übersetzungen mit unterschiedlichem Vorzeichen benötigt werden. Die koaxiale Bauweise ermöglicht eine baulich günstige Auslegung, die z.B. ohne Nebenwellen auskommt.

Bevorzugt wird ferner vorgeschlagen, dass die Übersetzung des Koppelsatzes so ausgeführt ist, dass am Planetenradträger und an einem der Sonnenräder eine betragsmäßig gleich große, aber entgegengesetzte Drehzahl und am anderen Sonnenrad eine im Vergleich dazu kleinere oder größere Drehzahl anliegt. Damit können im einen Leistungspfad Übersetzungen ins Schnelle oder Langsame verwirklicht werden, während im anderen Leistungspfad Abtriebsmomente mit ungleichen Vorzeichen einsteuerbar sind.

In einer ersten, vorteilhaften Auslegung des reduzierten Koppelsatzes kann mindestens ein Satz der Planetenräder gestuft mit unterschiedlichen Zähnezahlen ausgeführt sein. Insbesondere können die radial inneren, mit den Sonnenrädern kämmenden Planetenräder gestuft mit unterschiedlichen Zähnezahlen ausgeführt sein, wobei die triebliche Verbindung mit dem feststehenden Hohlrad über radial äußere Planetenräder hergestellt ist, die mit nur einer Stufe der radial inneren Planetenräder kämmen. Dies ermöglicht neben einer baulichen Vereinfachung konstruktiv größere Freiheitsgrade in der Übersetzungsauslegung des Koppelsatzes.

Alternativ können zumindest die radial inneren Planetenradsätze ungestuft ausgeführt sein, wobei die unterschiedlichen Zähnezahlen der Sonnenräder durch Profilverschiebungen in den Verzahnungen hergestellt sind. Damit ist bei in der Auslegung engeren Übersetzungsverhältnissen ein geringerer Fertigungs- und Bauaufwand des Koppelsatzes gegeben.

Eine besonders bevorzugte Verwendung der vorstehenden Getriebevorrichtung wird an einer Antriebsachse eines Kraftfahrzeuges gesehen, die mittels einer elektrischen Maschine antreibbar ist und die über die Schalteinrichtung in einen Antriebsmodus (z.B. Hybridantrieb) als den einen Leistungspfad oder in einen Torque Vectoring Modus als den zweiten Leistungspfad umschaltbar ist.

Ein Ausführungsbeispiel der Erfindung ist im folgenden näher erläutert. Die anliegende, schematische Zeichnung zeigt in:
- Fig. 1: eine Getriebevorrichtung für eine mittels einer elektrischen Maschine antreibbare Achse für Kraftfahrzeuge, mit zwei über eine Schalteinrichtung umschaltbare Planetenradsätze, wobei ein Planetenradsatz als reduzierter Koppelsatz ausgebildet ist;
- Fig. 2: eine Wolf-Symbolik des Koppelsatzes gemäß Fig. 1 und
- Fig. 3: eine zur Fig. 1 alternative Ausführung des Koppelsatzes mit gestuften Planetenrädern.

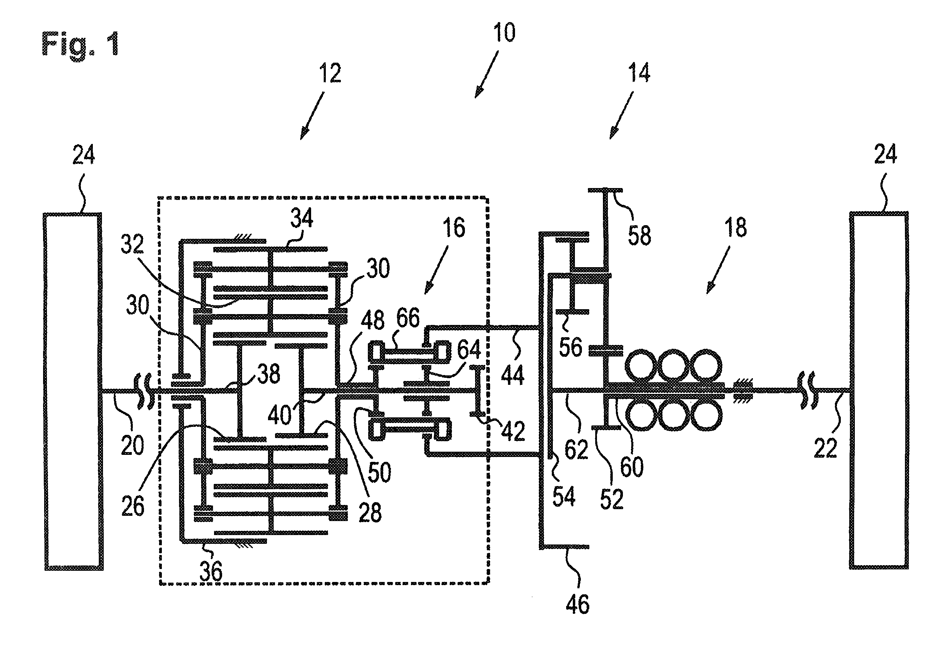

In der Fig. 1 ist mit 10 in schematischer Ansicht eine antreibbare Achse, z.B. eine Hinterachse, für ein Kraftfahrzeug bezeichnet, mit einer Getriebevorrichtung mit zwei Planetenradsätzen 12, 14, einer dazwischen angeordneten Schalteinrichtung 16 und einer antreibenden, in beide Drehrichtungen umsteuerbaren elektrischen Maschine 18.

Die Getriebevorrichtung 12, 14 treibt ausgangsseitig auf zwei Abtriebswellen 20, 22, die mit den Rädern 24 trieblich verbunden sind. Die elektrische Maschine 18 ist koaxial zur Abtriebswelle 22 angeordnet.

Die miteinander in Wirkverbindung stehenden Planetenradsätze 12, 14 sind wie folgt konzipiert:

Der Planetenradsatz 12 ist als reduzierter Koppelsatz mit zwei Sonnenrädern 26, 28, einem Planetenradträger 30 mit radial inneren Planetenrädern 32 und radial äußeren Planetenrädern 34 und einem Hohlrad 36 ausgeführt.

Die Sonnenräder 26, 28 weisen unterschiedliche Zähnezahlen auf und kämmen mit den radial inneren, sich über beide Sonnenräder 26, 28 erstreckenden Planetenrädern 32, die eine einheitliche Verzahnung besitzen. Dies ist ermöglicht durch eine Profilverschiebung der Verzahnungen an den Sonnenrädern 26, 28. Zur besseren Kenntlichmachung dieser unterschiedlichen Zähnezahlen ist das Sonnenrad 28 mit geringerem Außendurchmesser (= geringere Zähnezahl) gezeichnet. Tatsächlich kämmen beide Sonnenräder 26, 28 mit den korrespondierenden Planetenrädern 32.

Ferner sind die radial äußeren Planetenräder 34 sowohl mit den inneren Planetenrädern 32 als auch mit dem radial äußeren Hohlrad 36 über dessen entsprechende Innenverzahnung in Eingriff. Das Hohlrad 36 ist feststehend angeordnet und dient auch der Momentenabstützung innerhalb des Koppelsatzes 12.

Das Sonnenrad 26 ist mit der Abtriebswelle 20 über eine erste Ausgangswelle 38 trieblich verbunden. Die zweite mit dem Sonnenrad 28 verbundene Ausgangswelle 40 ist über ein Kupplungszahnrad 42 der Schalteinrichtung 16 und eine Hohlwelle 44 mit dem Hohlrad 46 des Planetenradsatzes 14 verbindbar.

Des Weiteren ist der Planetenradträger 30 über eine Hohlwelle 48 und ein zweites Kupplungszahnrad 50 ebenfalls über die Hohlwelle 44 mit dem Hohlrad 46 des Planetenradsatzes 14 kuppelbar.

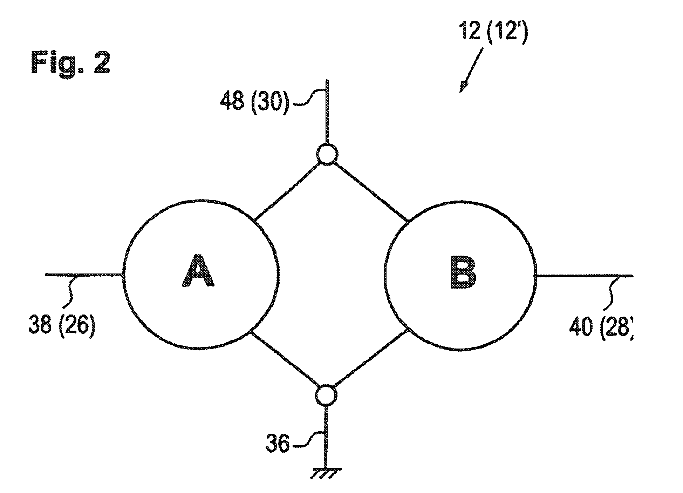

Mit Bezug zunächst zur Fig. 2 ist anhand der Wolf-Symbolik ersichtlich, dass der vierwellige, reduzierte Koppelsatz 12 quasi durch zwei Planetenradsätze A und B gebildet ist, mit der ersten Ausgangswelle 38 bzw. dem Sonnenrad 26, der zweiten Ausgangswelle 40 mit dem Sonnenrad 28, der Hohlwelle 48 des Planetenradträgers 30 und schließlich mit dem feststehenden Hohlrad 36.

Die triebliche Verknüpfung ist aufgrund der beschriebenen Konzeption beim Planetenradsatz A mit dem Sonnenrad 26, dem Planetenradträger 30 mit den Planetenrädern 32, 34 und dem feststehenden Hohlrad 36. Der Planetenradsatz B mit dem Sonnenrad 28 nutzt ebenfalls das gemeinsame Hohlrad 36 und den gemeinsamen Planetenradträger 30 mit den Planetenrädern 32, 34.

Der Planetenradsatz 14 weist wie aus Fig. 1 ersichtlich ist, ein Sonnenrad 52, einen Planetenradträger 54 mit gestuften Planetenrädern 56, 58 und das Hohlrad 46 auf.

Das Sonnenrad 52 ist mit der Antriebshohlwelle 60 der nur angedeuteten, elektrischen Maschine 18 trieblich verbunden und kämmt mit den Planetenrädern 58, während die Planetenräder 56 geringerer Zähnezahl mit der Innenverzahnung des Hohlrades 46 in Eingriff sind. Der Planetenradträger 54 wiederum ist über eine Ausgangswelle 62 mit der Abtriebswelle 22 verbunden.

Die Schalteinrichtung 16 ist gebildet durch eine innenverzahnte, mit der Hohlwelle 44 dauerhaft über einen Kupplungskörper 64 verbundene, axial verschiebliche Schaltmuffe 66, die alternierend aus einer Neutralstellung heraus mit dem Kupplungszahnrad 42 oder 50 verbindbar ist und somit entweder die Ausgangswelle 40 und das Sonnenrad 28 oder die Hohlwelle 48 und den Planetenradträger 30 mit der Hohlwelle 44 und dem Hohlrad 46 des Planetenradsatzes 14 verbindet.

Die beschriebene Schalteinrichtung 16 kann z.B. eine an sich bei Schaltgetrieben bekannte Synchronkupplung sein. Die erforderliche Schaltbetätigung ist nicht dargestellt und kann hydraulisch oder elektromagnetisch über entsprechende Stellglieder bewerkstelligt sein.

Die Übersetzung des Koppelsatzes 12 ist so ausgeführt ist, dass am Planetenradträger 30 und an dem Sonnenrad 28 (= Planetenradsatz A) eine betragsmäßig gleich große, aber entgegengesetzte Drehzahl und am anderen Sonnenrad 26 (= Planetenradsatz B) eine im Vergleich dazu kleinere Drehzahl anliegt.

In der Schaltstellung für den elektrischen Antrieb der Achse 10 des Kraftfahrzeuges ist die Hohlwelle 44 des Planetenradsatzes 14 mit der Hohlwelle 48 des Planetenradträgers 30 des Koppelsatzes 12 verbunden. Der Leistungspfad verläuft dementsprechend und aufgrund der Übersetzungsauslegung der beiden Planetenradsätze 12, 14 mit gleichen Vorzeichen von der elektrischen Maschine 18 über den Planetenradträger 54 und die Ausgangshohlwelle 62 auf die eine Abtriebswelle 22 und über den Planetenradträger 30 und das Sonnenrad 26 auf die Ausgangswelle 38 bzw. die Abtriebswelle 20. Das zu übertragende Drehmoment ist innerhalb des Koppelsatzes 12 an dem gehäusefesten Hohlrad 36 abgestützt.

Im Torque Vectoring Modus ist das Hohlrad 46 des Planetenradsatzes 14 mit der Ausgangswelle 40 bzw. dem Sonnenrad 28 des Koppelsatzes 12 trieblich verbunden, wobei nunmehr über die elektrische Maschine 18 durch entsprechende Ansteuerung in beiden Drehrichtungen und durch die gewählte Übersetzungsauslegung Drehmomente mit unterschiedlichen Vorzeichen einsteuerbar sind. D.h. die eine Abtriebswelle 20 kann gegenüber der anderen Abtriebswelle 22 zur Beeinflussung der Fahrstabilität des Kraftfahrzeuges insbesondere in Kurven beschleunigt oder abgebremst werden.

Der Leistungspfad zum auf der Zeichnung linken angetriebenen Rad 24 verläuft nunmehr im wesentlichen über die Ausgangswelle 40 mit dem Sonnenrad 28 und über die radial innenliegenden Planetenräder 32 auf das Sonnenrad 26 mit der Ausgangswelle 38 und der Abtriebswelle 20, wobei das Reaktionsmoment über die radial äußeren Planetenräder 34 und das gehäusefeste Hohlrad 36 abgestützt ist.

Durch die Anordnung des Koppelsatzes 12 wird eine kompakte Bauweise erzielt, mit nur zwei in axialer Richtung nebeneinander angeordneten Zahneingriffen. Ferner ist von dem ersten Sonnenrad 26 zum zweiten Sonnenrad 28 ein positives Übersetzungsverhältnis und vom ersten Sonnenrad 26 zum Planetenradträger 30 wie vorstehend ausgeführt ein beitragsgleiches, aber vom Vorzeichen entgegengesetztes Übersetzungsverhältnis einstellbar.

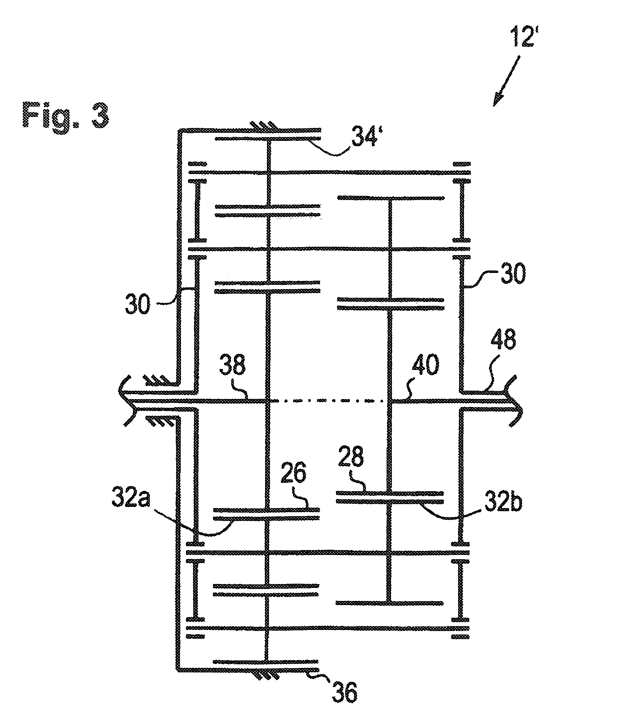

Die Fig. 3 zeigt eine alternative Ausführung des Koppelsatzes 12' nach den Fig. 1 und 2 der Getriebevorrichtung, die jedoch nur soweit beschrieben ist, als sie sich wesentlich von der Ausführung gemäß Fig. 1 unterscheidet. Funktionell gleiche Teile sind mit gleichen Bezugszeichen versehen.

Abweichend zur Fig. 1 sind die radial inneren Planetenräder 32 des Koppelsatzes 12' gestuft ausgebildet, mit Planetenrädern 32a geringerer Zähnezahl und Planetenrädern 32b größerer Zähnezahl, um somit im Zusammenwirken mit den Sonnenrädern 26, 28 unterschiedlicher Zähnezahl und unterschiedlicher Außendurchmesser das gewünschte Übersetzungsverhältnis zu ermöglichen. Bei einer damit verbundenen, größeren Auslegungsfreiheit kann eine Profilverschiebung der Verzahnungen an den Sonnenrädern 26, 28 entfallen.

Ferner sind die radial äußeren Planetenräder 34' nicht durchgehend zwischen den die Planetenräder 32a, 32b, 34' lagernden Planetenradträger 30 ausgeführt, sondern sind wie ersichtlich nur mit den Planetenrädern 32a und mit dem radial äußeren Hohlrad 36 in Eingriff.

Abweichend zu der Getriebevorrichtung nach Fig. 1 kann die Schalteinrichtung 16 auch auf der entgegengesetzten Seite des Koppelsatzes 12 angeordnet und in die Ausgangswelle 38 integriert sein, wobei sie in kinematischer Umkehrung entweder das Sonnenrad 26 oder den Planetenradträger 30 ausgangsseitig mit der Ausgangswelle 38 verbindet. Das Sonnenrad 28 kann dann direkt mit dem Hohlrad 46 des zweiten Planetenradsatzes 14 verbunden sein. Daraus resultiert eine in axialer Richtung besonders kurz bauende Konstruktion mit unmittelbar aneinander gebauten Planetenradsätzen 12, 14.

Anstelle der beschriebenen, formschlüssigen Schalteinrichtung 16 kann auch eine reibschlüssige Kupplung, z.B. eine hydraulisch gesteuerte Doppellamellenkupplung verwendet sein.

## Patentansprüche

1. Getriebevorrichtung, insbesondere für Kraftfahrzeuge, mit zwei Abtriebswellen und zwei miteinander in Wirkverbindung stehenden, mehrwelligen Planetenradsätzen, wobei jeweils eine Welle eines Planetenradsatzes mit einer Abtriebswelle in Wirkverbindung bringbar ist und eine Schalteinrichtung vorgesehen ist, über welche zwischen einem ersten Leistungspfad oder einem zweiten Leistungspfad zwischen den Abtriebswellen umschaltbar ist und wobei im Bereich einer weiteren Welle eines der Planetenradsätze ein Drehmoment einer elektrischen Maschine bei geschaltetem ersten Leistungspfad zu gleichen Teilen und mit gleichen Vorzeichen und bei geschaltetem zweiten Leistungspfad zu gleichen Teilen und mit unterschiedlichem Vorzeichen zu den Abtriebswellen geführt wird, **dadurch gekennzeichnet, dass** einer der beiden Planetenradsätze (12, 14) als vierwelliges, reduziertes Koppelgetriebe (12) ausgeführt ist, mit zwei axial nebeneinander angeordneten Sonnenrädern (26, 28), einem gemeinsamen Planetenradträger (30) mit radial inneren und radikal äußeren, miteinander kämmenden Planetenrädern (32, 34), die mit den Sonnenrädern (26, 28) unterschiedlicher Zähnezahl einerseits und mit einem unverdrehbar angeordneten Hohlrad (36) andererseits in Eingriff sind.

2. Getriebevorrichtung nach Anspruch 1, **dadurch gekennzeichnet, dass** die Übersetzung des Koppelsatzes (12) so ausgeführt ist, dass am Planetenradträger (30) und an einem der Sonnenräder (28) eine betragsmäßig gleich große, aber entgegengesetzte Drehzahl und am anderen Sonnenrad (26) eine im Vergleich dazu kleinere oder größere Drehzahl anliegt.

3. Getriebevorrichtung nach Anspruch 1 oder 2, **dadurch gekennzeichnet, dass** mindestens ein Satz (32a, 32b) der Planetenräder gestuft mit unterschiedlichen Zähnezahlen ausgeführt ist.

4. Getriebevorrichtung nach Anspruch 3, **dadurch gekennzeichnet, dass** die radial inneren, mit den Sonnenrädern (26, 28) kämmenden Planetenräder (32a, 32b) gestuft mit unterschiedlichen Zähnezahlen ausgeführt sind und dass die triebliche Verbindung mit dem feststehenden Hohlrad (36) über Planetenräder (34') hergestellt ist, die mit nur einer Stufe (32a) der radial inneren Planetenräder (32a, 32b) kämmen.

5. Getriebevorrichtung nach Anspruch 1 oder 2, **dadurch gekennzeichnet, dass** zumindest die radial inneren Planetenräder (32) ungestuft ausgeführt sind und dass die unterschiedlichen Zähnezahlen der Sonnenräder (26, 28) durch Profilverschiebungen in den Verzahnungen hergestellt sind.

6. Verwendung einer Getriebevorrichtung nach einem oder mehreren der vorhergehenden Ansprüche an einer Antriebsachse (10) eines Kraftfahrzeuges, die mittels einer elektrischen Maschine (18) antreibbar ist und die über die Schalteinrichtung (16) in einen Antriebsmodus als den einen Leistungspfad oder in einen Torque Vectoring Modus als den zweiten Leistungspfad umschaltbar ist.

## Claims

1. Transmission device, in particular for motor vehicles, having two drive output shafts and having two multi-shaft planetary gear sets which are operatively connected to one another, wherein in each case one shaft of a planetary gear set can be placed in operative connection with a drive output shaft, and a switching device is provided by means of which a switch can be made between a first power path or a second power path between the drive output shafts, and wherein in the region of a further shaft of one of the planetary gear sets, a torque of an electric machine is transmitted to the drive output shafts in equal parts and with the same sign when the first power path is engaged, and is transmitted to the drive output shafts in equal parts and with the opposite sign when the second power path is engaged, **characterized in that** one of the two planetary gear sets (12, 14) is designed as a four-shaft reduction coupling gear set (12), having two sun gears (26, 28) arranged axially adjacent to one another and having a common planet gear carrier (30) with radially inner and radially outer intermeshing planet gears (32, 34) which engage at one side with the sun gears (26, 28), which have different numbers of teeth, and at the other side with a non-rotatably arranged internal gear (36).

2. Transmission device according to Claim 1, **characterized in that** the transmission ratio of the coupling set (12) is designed such that the planet gear carrier (30) and one of the sun gears (28) rotate at rotational speeds of equal magnitude but in opposite directions, and the other sun gear (26) rotates at a comparatively lower or higher rotational speed.

3. Transmission device according to Claim 1 or 2, **characterized in that** at least one set (32a, 32b) of the planet gears is of stepped design with different numbers of teeth.

4. Transmission device according to Claim 3, **characterized in that** the radially inner planet gears (32a, 32b) which mesh with the sun gears (26, 28) are of stepped design with different numbers of teeth, and **in that** the drive connection to the static internal gear (36) is produced via planet gears (34') which mesh with only one step (32a) of the radially inner planet gears (32a, 32b).

5. Transmission device according to Claim 1 or 2, **characterized in that** at least the radially inner planet gears (32) are of non-stepped design, and **in that** the different numbers of teeth of the sun gears (26, 28) are produced by profile offsets in the toothings.

6. Use of a transmission device according to one or more of the preceding claims on a drive axle (10) of a motor vehicle, which can be driven by means of an electric machine (18) and which can be switched by means of the switching device (16) into a drive mode as one power path or into a torque vectoring mode as the second power path.

## Revendications

1. Dispositif de boîte de vitesses, en particulier pour véhicules automobiles, comprenant deux arbres de sortie et deux trains planétaires à plusieurs arbres en liaison fonctionnelle l'un avec l'autre, un arbre d'un train planétaire pouvant être amené en liaison fonctionnelle à chaque fois avec un arbre de sortie et un dispositif de changement de vitesses étant prévu, par le biais duquel une commutation peut être effectuée entre une première voie de puissance ou une deuxième voie de puissance entre les arbres de sortie, et un couple d'une machine électrique étant transmis dans la région d'un autre arbre de l'un des trains planétaires, lorsque la première voie de puissance est commutée, dans les mêmes proportions et avec les mêmes signes, et lorsque la deuxième voie de puissance est commutée, dans les mêmes proportions et avec des signes différents, aux arbres de sortie, **caractérisé en ce que** l'un des deux trains planétaires (12, 14) est réalisé sous forme d'engrenage couplé réduit (12) à quatre arbres, avec deux roues solaires (26, 28) disposées axialement l'une à côté de l'autre, un porte-satellites (30) commun, avec des pignons planétaires (32, 34) radialement internes et radialement externes s'engrenant les uns avec les autres, qui sont en prise avec les roues solaires (26, 28) de nombres de dents différents d'une part, et avec la couronne (36) disposée de manière non rotative d'autre part.

2. Dispositif de boîte de vitesses selon la revendication 1, **caractérisé en ce que** la démultiplication du jeu d'accouplement (12) est réalisée de telle sorte que sur le porte-satellites (30) et sur l'une des roues solaires (28) s'applique une vitesse de rotation identique en valeur absolue, mais de sens opposé, et sur l'autre roue solaire (26) une vitesse de rotation plus petite ou plus grande par rapport à celle-ci.

3. Dispositif de boîte de vitesses selon la revendication 1 ou 2, **caractérisé en ce qu'**au moins un jeu (32a, 32b) des pignons planétaires est réalisé sous forme étagée avec des nombres de dents différents.

4. Dispositif de boîte de vitesses selon la revendication 3, **caractérisé en ce que** les pignons planétaires (32a, 32b) radialement internes, s'engrenant avec les roues solaires (26, 28), sont réalisés sous forme étagée avec des nombres de dents différents, et **en ce que** la liaison par entraînement avec la couronne fixe (36) est réalisée par le biais de pignons planétaires (34') qui s'engrènent avec seulement un étage (32a) des pignons planétaires radialement internes (32a, 32b).

5. Dispositif de boîte de vitesses selon la revendication 1 ou 2, **caractérisé en ce qu'**au moins les pignons planétaires radialement internes (32) sont réalisés sous forme non étagée, et **en ce que** les différents nombres de dents des roues solaires (26, 28) sont fabriqués par des décalages des profils dans les dentures.

6. Utilisation d'un dispositif de boîte de vitesses selon l'une quelconque ou plusieurs des revendications précédentes sur un essieu moteur (10) d'un véhicule automobile, qui peut être entraîné au moyen d'une machine électrique (18) et qui peut être commuté par le biais du dispositif de changement de vitesses (16) dans un mode d'entraînement en tant que première voie de puissance, ou dans un mode de vecteur de couple en tant que deuxième voie de puissance.
